# EUROPÄISCHE PATENTANMELDUNG

(11) **EP 2 452 770 A2**
(43) Veröffentlichungstag der Anmeldung: **16.05.2012**
(21) Anmeldenummer: 11188548.9
(22) Anmeldetag: 10.11.2011
(51) Int. Cl.: B23C 3/28

(54) **Verfahren zum Herstellen von schrägstehenden Nuten in der Außen- oder Innenumfangsfläche eines rotationssymmetrischen Grundkörpers**

(30) Priorität: 12.11.2010 DE 102010051284
(71) Anmelder: MAG IAS GmbH, 73033 Göppingen (DE)
(72) Erfinder: Dr. Stanik, Markus, 73095 Albershausen (DE); Harscher, Werner, 73092 Heiningen (DE); Biegert, Robert, 89558 Treffelhausen (DE); Schmitt, Oskar, 73079 Süssen (DE)
(74) Vertreter: Alber, Norbert

(57) **Zusammenfassung**

Um Werkstücke (1) auf einer Drehmaschine (100) mit C-Achse herzustellen, die im Innenumfang oder im Außenumfang schräg verlaufende, zur Z-Achse also windschief stehende, Längsnuten (2.1, 2.2) aufweisen, wird erfindungsgemäß vorgeschlagen, hierfür ein drehend antreibbares Fräs- oder Schleifwerkzeug (3) zu benutzen, welches nur um eine Achse, vorzugsweise die B-Achse, schwenkbar ausgebildet sein muss, und dennoch alle gewünschten Schrägstellungswinkel (β) von Nuten (2.1, 2.2) herstellen zu können, indem zusammen mit einem definierten Einstellwinkel (γ) des Werkzeuges (3) um diese z. B. B-Achse das Werkstück (1) um die Z-Achse in eine bestimmte Drehlage vor Beginn der Herstellung der Nut (2.1, 2.2) gebracht wird.

## Beschreibung

Die Erfindung betrifft ein Verfahren zum Herstellen von geraden oder gekrümmten, Nuten in der Außen- oder Innenumfangsfläche eines rotationssymmetrischen Grundkörpers, die zur Symmetrieachse des Grundkörpers schrägstehen.

Die Querschnittskontur der Nuten ist etwa U-förmig oder gotisch und symmetrisch zu der Mittellinie der Querschnittskontur, die auf der Mitte des Nutbodens in der Regel senkrecht steht.

Bei schrägstehenden, geraden Nuten sind zwei Fälle zu unterscheiden:
Entweder liegt die Verlaufsrichtung der Nut, etwa der Nutengrund, in einer Tangentialebene Z' bezüglich der Symmetrieachse Z des rotationssymmetrischen Grundkörpers, also einer zur Symmetrieachse Z parallelen Ebene.
Oder die Verlaufsrichtung der Nut steht auch schräg zu dieser Tangential-ebene Z' und schneidet damit jede Tangentialebene.

Die gerade Verlaufsrichtung der Nut, also z.B. die Mittellinie des Nutbodens entlang der Nut, steht dann in beiden Fällen windschief zur Z-Achse.

Bei schrägstehenden, gekrümmten Nuten soll zunächst klargestellt werden, dass es sich dabei nur um solche Nuten handelt, die in der Seitenansicht betrachtet eine Krümmung aufweisen, in der Aufsicht von oben auf die offene Seite der Nut dagegen gerade sind.

Die Verlaufsrichtung dieser gekrümmten Nuten ist also eine gekrümmte Linie, jedoch liegt diese gekrümmte Verlaufsrichtung in einer Ebene, der Längsmittelebene der Nut, die an jeder Stelle der Nut den Nutquerschnitt halbiert und die Symmetrieebene des Nutquerschnittes darstellt.

Die gekrümmte Verlaufsrichtung liegt dann nicht mehr in einer Tangentialebene Z' bezüglich der Rotationsachse Z des Grundkörpers, eventuell aber die durch Nutanfang und Nutende definierte Grobrichtung der Nut, die wiederum eine Gerade ist, und eine Sehne an die z. B. bogenförmige Verlaufsrichtung der Nut darstellt.

Denn in einer bevorzugten Ausführungsform ist die in der Längsmittelebene liegende gekrümmte Verlaufsrichtung der Nut eine sphärische Krümmung, insbesondere mit einem gleich bleibenden Krümmungsradius.

### II. Technischer Hintergrund

Solange solche windschief schräg stehenden Nuten nur in dem Außenumfang eines rotationssymmetrischen Grundkörpers hergestellt werden müssen, besteht eine Möglichkeit darin, einen in dieser Tangentialebene Z', z. B. der Z-X-Ebene, gesteuert verfahrbaren Stiftfräser oder ein stiftförmiges Schleifwerkzeug lotrecht zu dieser Z-X-Ebene zu stellen, und den rotationssymmetrischen Grundkörper so zu positionieren, dass die Tangentialebene, in der der Nutengrund der herzustellenden Nut liegen soll, diese Z-X-Ebene ist.

Dann wird - bei hinsichtlich der Drehung um die C-Achse stillstehendem Werkstück - das Werkzeug in der Z-X-Ebene in Verlaufsrichtung der Nut relativ zum Werkstück bewegt und damit die Nut gefräst oder geschliffen.

Allerdings werden solche Werkstücke häufig als Einzelteile so genannter homokinetischer Gelenke benötigt, so dass dann entsprechende Nuten nicht nur im Außenumfang eines Kugelsterns benötigt werden, sondern auch im Innenumfang einer zugehörigen Kugelschale, wobei im montierten Zustand zwischen diesen beiden koaxial angeordneten Teilen dann noch der Kugelkäfig angeordnet ist, der mit seinen Durchbrüchen die als Mitnehmer wirkenden Kugeln in der gewünschten Position hält.

Die im Innenumfang der Kugelschale herzustellenden, ebenfalls zur Z-Achse windschiefen Nuten können jedoch nicht mit einem senkrecht auf dem Nutboden stehenden Stiftfräser hergestellt werden, da hierfür der freie Innenraum in der Kugelschale zu gering ist, um dort den Stiftfräser sowie die ihn rotierend antreibenden Antriebselemente unterzubringen.

Aus diesem Grund werden bei derartigen Werkstücken, insbesondere wenn sie als Einzelteile für homokinetische Gelenke dienen, diese bisher so hergestellt, dass der Stiftfräser beim Entlangfahren zum Herstellen der Nut in deren Verlaufsrichtung in der Längsmittelebene der Nut liegt, aber zu der Verlaufsrichtung der Nut unter einem Anstellungswinkel angestellt ist.

Da jedoch der Schrägstellungswinkel der Nut gegenüber der Z-Achse - in der lotrechten Aufsicht auf diejenige Tangentialebene, in der sich die Nut befindet - je nach Fertigungsvorgaben ein anderer sein kann, muss für dieses bisherige Vorgehen der Stiftfräser verschwenkbar sowohl um die B-Achse (für den Anstellungswinkel) als auch um die A-Achse (für den Schrägstellungswinkel) der Nut sein. Zusätzlich muss das Werkstück relativ zum Werkzeug in allen drei Raumrichtungen gesteuert verfahrbar sein. Dies bedingt eine sehr aufwändige Maschine.

Die Alternative, statt des Werkzeuges das Spannfutter für das Werkstück um A- und B-Achse schwenkbar zu gestalten, ist noch aufwändiger.

### III. Darstellung der Erfindung

### a) Technische Aufgabe

Es ist daher die Aufgabe gemäß der Erfindung, ein Verfahren zum Herstellen gattungsgemäßer Werkstücke auf einer Werkzeugmaschine mit C-Achse zur Verfügung zu stellen, welches mit einer einfacheren Konstruktion der Maschine, insbesondere des angetriebenen Werkzeuges auskommt.

### b) Lösung der Aufgabe

Diese Aufgabe wird durch die Merkmale der Ansprüche 1 und 11 gelöst. Vorteilhafte Ausführungsformen ergeben sich aus den Unteransprüchen.

Der Grundgedanke der Erfindung besteht darin, mit einer Verschwenkbarkeit des Werkzeuges um nur eine Achse, nämlich insbesondere die B-Achse, auszukommen.

Die Werkzeuglängsachse liegt somit immer in einer Ebene, die parallel zur Symmetrieachse Z ist oder die Symmetrieachse Z enthält. Diese Ebene wird für die Zwecke der vorliegenden Anmeldung als Werkzeugebene bezeichnet und ausgedrückt in den Raumkoordinaten als Z-X-Ebene definiert, wodurch die X-Richtung ebenfalls festgelegt wird. Die Richtung lotrecht zu dieser Werkzeugebene ist somit die Y-Richtung.

Zunächst muss der Einstellwinkel, unter dem die Längsachse des Werkzeuges schräg zur Z-Achse in der Z-X-Ebene, der Werkzeugebene, eingestellt werden muss, also z.B. aus der Z-Richtung um die B-Achse geschwenkt werden muss, bestimmt werden.

Im Folgenden wird für die beiden zu unterscheidenden Fälle, nämlich herzustellende schrägstehende gerade Nuten einerseits oder herzustellende schrägstehende gekrümmte Nuten andererseits zunächst der einfacher zu beschreibende Fall der geraden Nuten dargelegt:

Schrägstehende gerade Nuten, sowohl in einer Tangentialebene des Werkstückes liegend als auch in keiner solchen Tangentialebene liegend:

Für die Bestimmung des Einstellwinkels ist zum einen der vorgegebene Schrägungswinkel β der herzustellenden Nut zu beachten, der auftragsseitig vorgegeben wird.

Des Weiteren ist dabei der Anstellwinkel α zu beachten, den die Werkzeuglängsachse gegenüber der Verlaufsrichtung der herzustellenden Nut in der Längsmittelebene der herzustellenden Nut einnehmen müsste, falls die Werkzeuglängsachse beim Herstellen der Nut in dieser Längsmittelebene liegen würde.

Die Längsmittelebene der Nut ist definiert durch die Summe der Mittellinien der Querschnittskonturen der Nut entlang ihres Verlaufes, sofern diese Mittellinien in einer gemeinsamen Ebene, nämlich der Längsmittelebene, liegen.

Dieser Anstellwinkel α wird meist vom Werkzeughersteller vorgegeben, denn abhängig von diesem Anstellwinkel α hat der Werkzeughersteller die Kontur des Werkzeugkopfes gestaltet, um zu dem gewünschten Querschnitt der Nut zu gelangen. In manchen Fällen wird der Anstellwinkel α vom Fertiger des Werkstückes auch dem Werkzeughersteller vorgegeben, der dann daraufhin die Form des Werkzeugkopfes entsprechend gestaltet.

Beides, der Anstellwinkel α für die Werkzeuglängsachse als auch der Schrägungswinkel β der herzustellenden Nut sind Eingangsgrößen zum Ermitteln des Einstellwinkels γ für die Werkzeuglängsachse, dessen Bestimmung später dargelegt wird.

Für das Herstellungsverfahren ist ein wichtiger Punkt die Tatsache, dass die Längsmittelebene der herzustellenden Nut, also die Symmetrieebene dieser hinsichtlich ihres Querschnitts mittensymmetrischen Nut, durch Drehung des Werkstückes um die Rotationsachse mitgedreht werden kann, und es dabei immer eine Drehlage gibt, in der diese Längsmittelebene der herzustellenden Nut parallel zu der unter dem vorher erwähnten Einstellwinkel in der Z-X-Ebene eingestellten Werkzeuglängsachse liegt.

Verschiebt man anschließend das unter dem Einstellwinkel γ eingestellte Werkzeug parallel in der X- und/oder Y-Richtung, bis die Werkzeuglängsachse in der wie zuvor beschrieben verdrehten Längsmittelebene der herzustellenden Nut liegt, so ist der in der Längsmittelebene der herzustellenden Nut gemessene Winkel zwischen Verlaufsrichtung der Nut und Werkzeuglängsachse, wieder der eingangs erwähnte Anstellwinkel α.

Außer der Parallelverschiebung in der X- und/oder Y-Richtung wird das Werkzeug in Verlaufsrichtung der Nut oder in Z-Richtung vor dem Werkstück positioniert und in radialer Richtung des Werkstückes so, dass beim anschließenden Entlangfahren des rotierenden Werkzeuges von dieser Startposition aus in Verlaufsrichtung der Nut die gewünschte Nut mit der vorgegebenen Tiefe durch das Werkzeug hergestellt wird.

Von dieser Startposition aus muss nun das rotierende Werkzeug als Vorschub nur noch geradlinig in Verlaufsrichtung der herzustellenden Nut im Eingriff zum Werkstück bewegt werden, wobei diese Bewegung in aller Regel Komponenten aller drei Raumrichtungen enthält, und die Aufteilung dieser Bewegungskomponenten auf Bewegungen des Werkstückes oder des Werkzeuges frei verteilt werden kann, z.B. je nach den Möglichkeiten der benutzten Werkzeugmaschine. Eine Drehung des Werkstückes um seine Rotationsachse findet während des Herstellens der Nut jedoch nicht statt.

Wenn mehrere Nuten mit gleichem Schrägungswinkel und gleicher Nutform und Nuttiefe hergestellt werden sollen, muss hierfür das Werkzeug lediglich zurück in seine Startposition verbracht werden und das Werkstück um den Teilungswinkel zwischen den Nuten gleicher Gestaltung verdreht werden, bevor die nächste Nut gefertigt werden kann.

Die Bestimmung des Einstellwinkels γ, um den die Werkzeuglängsachse aus der Nulllage, also der Z-Richtung, heraus um die B-Achse verstellt werden muss, wird am einfachsten geometrisch beschrieben, da es sich um einen von Anstellwinkel α und Schrägungswinkel β abhängigen Raumwinkel handelt, und wird in der Praxis unter Benutzung dieser geometrischen Zusammenhänge meist rechnerisch ermittelt:

Die Verlaufsrichtung der herzustellenden Nut definiert zusammen mit der Z-Richtung eine erste Ebene, die parallel zur Z-Achse liegt und eine Tangentialebene Z' hierzu ist. Die Längsmittelebene der Nut steht senkrecht auf dieser Tangential-Ebene Z', und in diese Längsmittelebene legt man die Werkzeuglängsachse - gedanklich, da die Werkzeuglängsachse bei der benutzten Maschine um die dafür notwendige A-Achse gar nicht schwenkbar ist - um den vorgegebenen Anstellwinkel α der Werkzeuglängsachse relativ zur Verlaufsrichtung der Nut in dieser Längsmittelebene einzustellen.

Der Einstellwinkel γ ergibt sich nun, indem die gedanklich so positionierte Werkzeuglängsachse in eine zweite Ebene, die wiederum parallel zur Z-Achse verläuft, aber zur ersten Ebene lotrecht steht - und sich damit auch von der Längsmittelebene der Nut unterscheidet - projiziert wird.

Nach diesen Vorgaben kann der Einstellwinkel γ auch von der Steuerung z.B. der Werkzeugmaschine mit Hilfe von trigonometrischen Formeln berechnet werden, ohne die zuvor beschriebenen Ebenen und die Projektion tatsächlich räumlich vornehmen zu müssen.

Die zuvor durchgeführte geometrische Herleitung dient lediglich der besseren Vorstellbarkeit.

Als Querschnitt der Nut - betrachtet in deren Verlaufsrichtung - wird eine zur Längsmittelebene der Nut liniensymmetrische U-Form gewählt, und deren Bodenbereich in aller Regel keine Kreissegment-Form ist, sondern entweder eine gotische Kontur, bei der die beiden Hälften dieses Teils der Querschnittskontur jeweils ein Kreissegment sind und sich im Nutboden in einer Spitze treffen, oder ein Teil einer elliptischen Kontur, in der der Nutboden das Ende der langen Halbachse der Ellipse darstellt.

Diese Formgebung dient dazu, dass die später in den Nuten laufenden Kugeln nicht linienförmig an der Nut anliegen, sondern auf jeder Seite idealerweise nur an einem definierten Kontaktpunkt.

Schräg stehende gekrümmte Nuten, mit ihrer Verlaufsrichtung in der Längsmittelebene der Nut liegend:

Für die Bestimmung des Einstellwinkels, der unter anderem vom meist vorgegebenen Anstellwinkel α abhängt, ist von Bedeutung, dass bei einer gekrümmten Nut der vorgegebene Anstellwinkel α für jeden einzelnen Punkt im Verlauf der Nut als Winkel zwischen der Werkzeuglängsachse - sofern sie in der Längsmittelebene der Nut läge - und der Tangente an die gekrümmte Verlaufsrichtung der Nut in diesem Punkt eingehalten sein muss.

Dementsprechend erfolgt die Bestimmung des Einstellwinkels wie zuvor für gerade Nuten beschrieben, jedoch für jeden Punkt im Verlauf der Nut separat. Anstelle der Verlaufsrichtung der Nut bei einer geraden Nut muss in diesem Fall die Verlaufstangente an die gekrümmte Verlaufsrichtung der Nut in jedem Punkt benutzt werden.

Auch die Relativ-Verfahrung des Werkzeuges zum Werkstück von der Startposition der Nut aus in Verlaufsrichtung sieht für die drei zu unterscheidenden Fälle unterschiedlich aus:

Bei geraden, in einer Tangentialebene des Werkstückes liegenden Nuten, muss eine Relativbewegung außer der Z-Richtung oft lediglich in Y-Richtung erfolgen, zum Teil auch in Y- und X-Richtung.

Liegt die gerade Nut dagegen nicht in einer Tangentialebene des Werkzeuggrundkörpers, ist zusätzlich während der Herstellung der Nut fast immer auch eine Bewegung in Y-Richtung notwendig, und zwar immer in die gleiche, also positive oder negative ,Y-Richtung bei Durchlaufen der Nut vom Anfang bis zum Ende.

Bei gekrümmten Nuten ist ebenfalls zusätzlich eine Relativ-Verfahrung in X-und Y-Richtung notwendig, jedoch kann sich im Verlauf der Nutherstellung ein Hin- und Herbewegen in X- und Y-Richtung, also ein Wechsel von der positiven zur negativen Richtung, erfolgen.

Wenn in ein und demselben Werkstück Nuten hergestellt werden sollen, die den entgegengesetzt gleichen Schrägungswinkel +/-β besitzen, ansonsten jedoch die gleichen Merkmale aufweisen, so muss hierfür der Einstellwinkel γ des Werkzeuges nicht neu bestimmt werden, sondern dieser bleibt vom Betrag her gleich. Was sich ändert, ist lediglich die Drehrichtung des Werkstückes von der positiven in die negative Richtung oder umgekehrt, und die Parallelverschiebung des Werkzeuges statt in die positive Y-Richtung in die negative Y-Richtung bzw. umgekehrt.

Auf diese Art und Weise können entgegengesetzt um den betragsmäßig gleichen Schrägungswinkel schräg gestellte Nuten in einem Werkstück mit sehr geringem Aufwand hintereinander hergestellt werden, da der Einstellwinkel der Werkstücklängsachse nur ein einziges Mal bestimmt und eingestellt werden muss.

In der Praxis bedeutet dies, dass neben dem Aufspannen des Werkstückes vom Bediener lediglich in die Eingabeeinheit der Steuerung der in der Regel vom Werkzeughersteller vorgegebene Anstellwinkel α für das Werkzeug sowie der der Konstruktionszeichnung des Werkstückes entnehmbare Schrägungswinkel β der Nut eingegeben werden muss - und wie immer selbstverständlich die Masse des Werkstückes und des Werkzeuges - , woraufhin die Steuerung
- automatisch den Einstellwinkel γ für das Werkzeug ermittelt und die Werkzeuglängsachse um diesen Winkel gegenüber der Z-Richtung durch Schwenken um die B-Achse einstellt,
- die gegebenenfalls notwendige Parallelverschiebung und Z-Verschiebung des Werkzeuges in die Startposition vornimmt, und
- die erste Nut fräst oder schleift.

Bei der Herstellung weiterer Nuten ist der Grundkörper wegen der bereits vorhandenen ersten Nut nicht mehr vollständig rotationssymmetrisch, so dass als weiterer Schritt, den die Steuerung vor dem Herstellen der Nut vornehmen muss, die Drehung des Werkstückes um die Z-Achse um das benötigte Maß, insbesondere den Teilungswinkel zwischen den gleich gestalteten Nuten, durchgeführt werden muss, bevor die nächste Nut gefräst werden kann.

Dementsprechend muss eine Werkzeugmaschine zum Herstellen von gattungsgemäßen Werkstücken folgende Merkmale aufweisen:
- zum einen eine gesteuerte C-Achse für die drehend antreibbare Werkstückspindel,
- zum anderen eine drehend antreibbare Werkzeugspindel, die um die B-Achse, also vorzugsweise nur um eine Achse, schwenkbar sein muss, und
- eine Relativverschiebbarkeit von Werkstückspindel zu Werkzeugspindel in allen drei Raumrichtungen. Dabei ist es egal, in welcher der drei Raumrichtungen die einzelnen Komponenten bewegt werden können gegenüber dem Maschinenbett, solange die notwendige Relativverschiebung zueinander erzielbar ist. Vorzugsweise ist dabei die Werkzeugspindel in Y-Richtung verfahrbar und die Werkstückspindel in X-und Z-Richtung verfahrbar; und
- eine Steuerung, die in der Lage ist, den Einstellwinkel γ aus Anstellwinkel α und Schrägungswinkel β automatisch zu ermitteln und an der Werkzeugspindel einzustellen und ebenso die Parallelverschiebung der so eingestellten Werkzeugspindel an die Startposition durchzuführen und das Werkzeug entlang der Verlaufsrichtung der Nut entlang einer Geraden zu verfahren, die beliebig schief im Raum stehen kann, also nicht parallel zu einer der drei Hauptebenen sein muss.

Vorzugsweise ist die um die B-Achse verschwenkbare und einstellbare Werkzeugspindel dabei in einer beidseits gelagerten, U-förmigen Schwinge angeordnet, die um die B-Achse verschwenkbar ist.

In einer solchen U-förmigen Schwinge können mehrere Werkzeugspindeln parallel nebeneinander angeordnet werden, so dass zusammen mit im gleichen Abstand parallel nebeneinander angeordneten und analog steuerbaren Werkstückspindeln mehrere gleiche Werkstücke gleichzeitig erzeugt werden können.

### c) Ausführungsbeispiele

Ausführungsformen gemäß der Erfindung sind im Folgenden beispielhaft näher beschrieben. Es zeigen:
- Fig. 1a, b:: Teile der Werkzeugmaschine in verschiedenen Ansichten,
- Fig. 2a - d:: das herzustellende Werkstück mit schrägstenden, geraden Nuten, die in Tangentialebenen des Werkstückes liegen, in unterschiedlichen Ansichten,
- Fig. 3a, b:: das Werkzeug in der Startposition bezüglich des herzustellenden Werkstückes,
- Fig. 4a, b:: die Verdrehung des Werkstückes,
- Fig. 5a, b:: die Bestimmung des Einstellwinkels,
- Fig. 5c:: die Raumsituation, aus der sich der Einstellwinkel ergibt, und
- Fig. 6:: andere Nutenanordnungen.

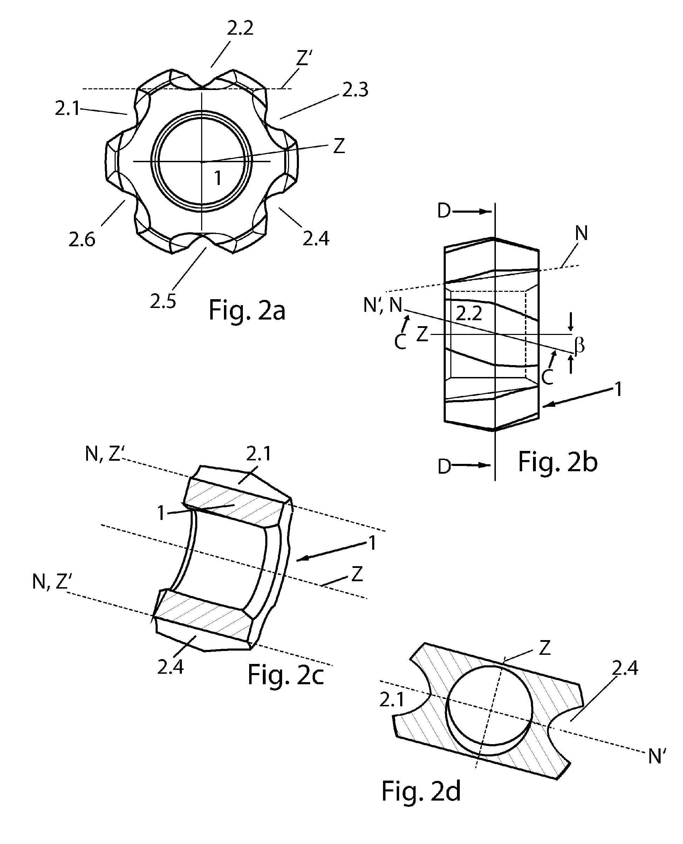

Zunächst ist in den Figuren 2 das herzustellende Werkstück 1 dargestellt, bei dem in diesem Fall Nuten 2.1 - 2.6 im Außenumfang des um die Symmetrieachse Z rotationssymmetrischen Grundkörpers dieses Werkstückes hergestellt werden sollen, der eine zentrale Bohrung aufweist.

Wie Figur 2b zeigt, liegt die Verlaufsrichtung N der Nut 2.1 dabei unter einem Schrägungswinkel β zur Z-Richtung bei Betrachtung lotrecht auf diejenige Tangentialebene, in der die Verlaufsrichtung N der Nut 2.1 liegt, und die am besten in Figur 2c erkennbar ist.

Figur 2d zeigt, dass die Nut in der Regel keinen kreissegmentförmigen Querschnitt besitzen, sondern entweder - wie am Beispiel der Nut 2.1 dargestellt
- eine gotische Querschnittsform besitzt, bei der der zur Längsmittelebene N' spiegelbildliche Nutquerschnitt - betrachtet in Verlaufsrichtung N der Nut
- aus zwei gleichen Kreissegmenten besteht, die sich im Nutgrund in einer Spitze treffen oder wie am Beispiel der Nut 2.4 dargestellt eine Querschnittskontur in Form eines Teils einer Ellipse, in der die lange Achse der Ellipse in der Längsmittelachse N' der Nut liegt.

Diese Form ist gewählt, damit eine in der Nut laufende Kugel nur an je zwei definierten Punkten Kontakt zur Nut hat.

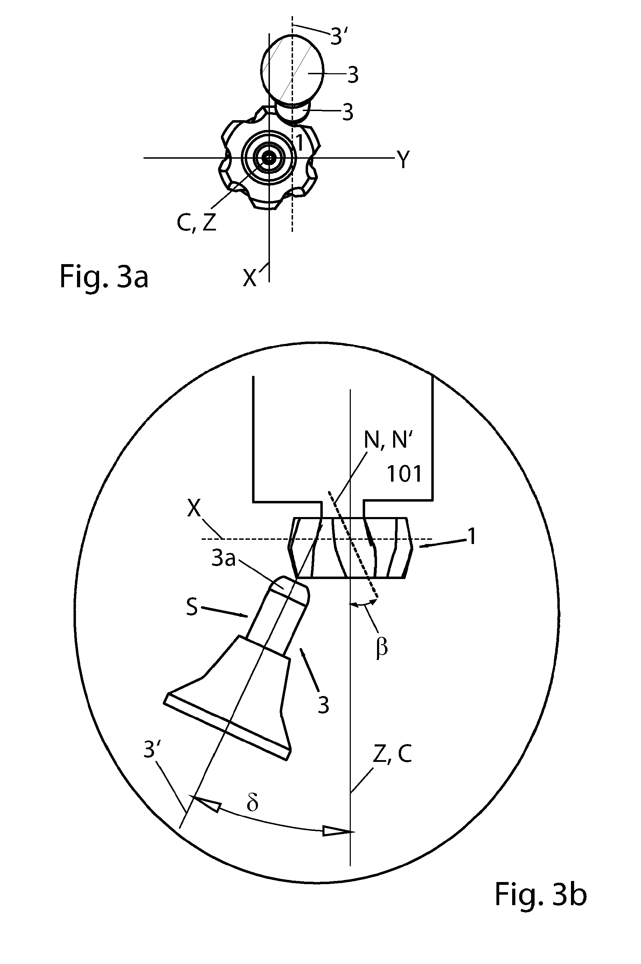

Figuren 3a und 3b zeigen - betrachtet in Z-Richtung und in Y-Richtung - die Startposition des Werkzeuges 3 in Relation zum Werkstück 1, also vor Beginn der Herstellung der Nuten.

Dabei ist zu erkennen, dass die Werkzeuglängsachse 3' des Werkzeuges 3 um einen Einstellwinkel γ- dessen Ermittlung später erläutert wird - in der Z-X-Ebene, der sogenannten Werkzeug-Ebene, also um die B-Achse, verschwenkt ist und mit seinem Werkzeugkopf 3a in Startposition S steht, also in Z-Richtung vor dem Werkstück 1, welches in der Werkstückspindel 101 aufgespannt ist, und aufgrund der gesteuerten C-Achse auch gesteuert verdrehbar ist, aber während der Bearbeitung einer Nut nicht verdreht wird.

Figur 3a zeigt, dass das Werkzeug 3 in dieser Einstellung aus der Mittellage heraus in X- und Y-Richtung zugestellt ist, so dass - betrachtet in Verlaufsrichtung N der Nut - der Werkzeugkopf 3a an der richtigen Stelle ist, um rotierend angetrieben und verfahren entlang der Verlaufsrichtung N der Nut die gewünschte Nut zu fräsen.

Wie Figur 3a zeigt, ist hierfür auch eine bestimmte Drehlage des Werkstückes 1 um die C-Achse notwendig, zumindest falls das Werkstück 1 zu diesem Zeitpunkt kein vollständig rotationssymmetrischer Körper mehr ist, beispielsweise weil bereits eine oder mehrere Nuten darin hergestellt sind, wie in Figur 3a dargestellt.

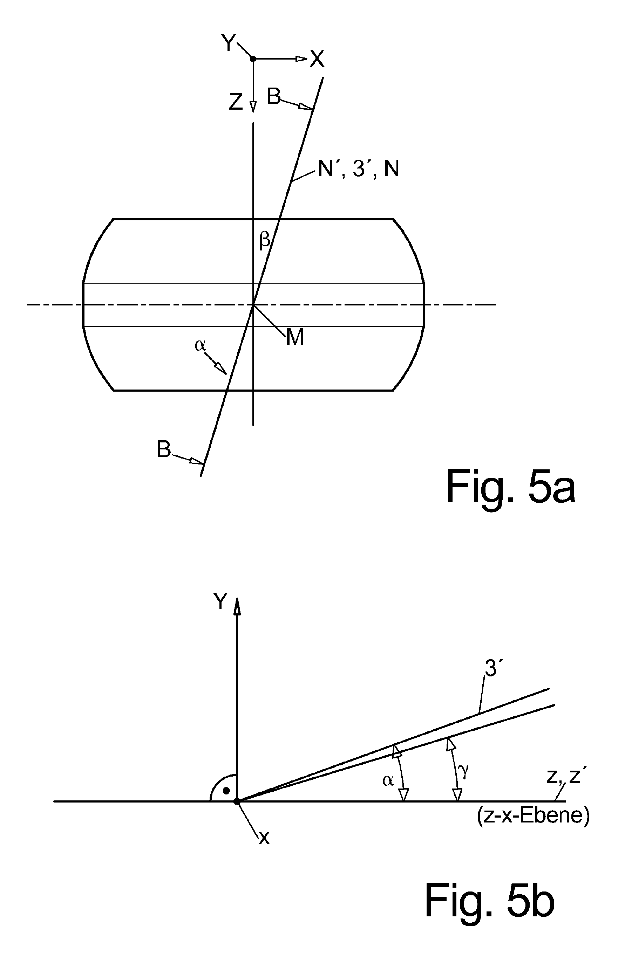

Die Bestimmung der Startposition und der notwendigen Drehlage des Werkstückes werden später anhand der Figuren 5a bis 5c erläutert.

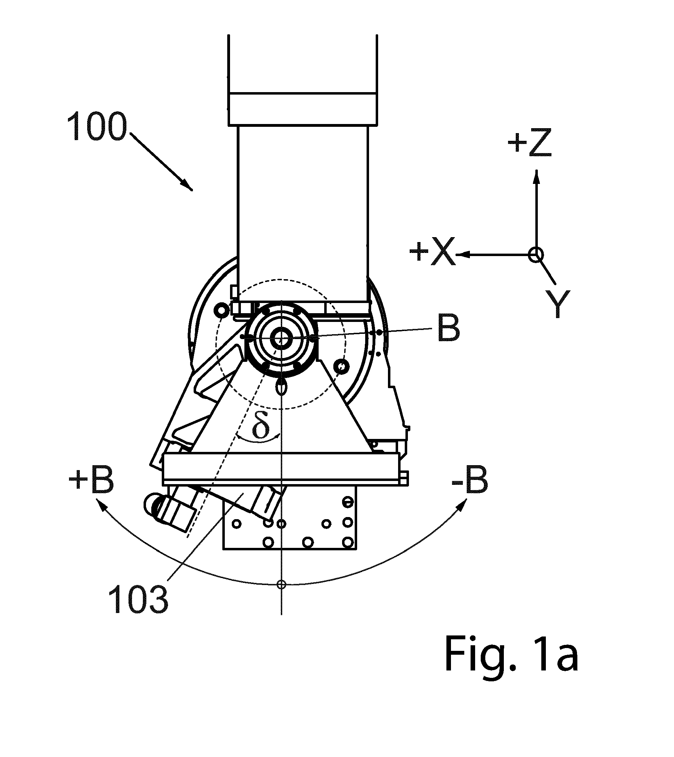

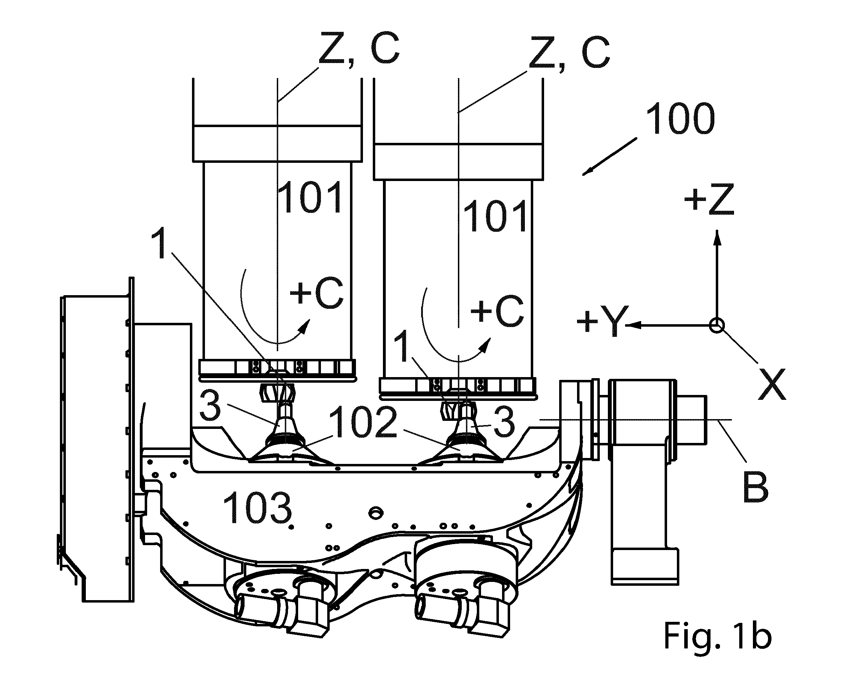

Die Figuren 1 zeigen über Werkstück 1 und Werkzeug 3 hinaus noch die wichtigsten daran beteiligten Komponenten der Werkzeugmaschine 100, mit der ein solches Werkstück 1, in diesem Fall in zwei Exemplaren gleichzeitig nebeneinander, hergestellt werden kann:

Wie Figur 1b zeigt, sind parallel nebeneinander beabstandet zwei Werkstückspindeln 101 angeordnet, von denen jede koaxial aufgespannt ein Werkstück 1 trägt, in dem im Außenumfang die beschriebenen Nuten 2.1, 2.2 hergestellt werden sollen.

In diesem Fall sind die Werkstückspindeln 101 sowohl in Z-Richtung als auch in X-Richtung verfahrbar, und zur Verdeutlichung dieser Tatsache in zwei unterschiedlichen Stellungen in Z-Richtung dargestellt, obwohl die Bearbeitung dieser beiden Werkstücke 1 in der Praxis synchron geschieht und sich auch die beiden Werkstückspindeln 101 dabei synchron bewegen.

Die beiden an je einem der Werkstücke 1 angreifenden stiftförmigen Werkzeuge 3 sind jeweils in einer drehend antreibbaren Werkzeugspindel 102 aufgenommen, die von der Innenseite einer U-förmigen Schwinge 103 abragen, welche um die B-Achse verschwenkbar ist und gesteuert auf den notwendigen Einstellwinkel γ eingestellt werden kann, wie die Ansicht in Y-Richtung auf diese B-Achse gemäß Figur 1a zeigt.

In gleicher Blickrichtung wie Figur 1a und nicht abgedeckt durch die Schwinge zeigt Figur 3b die entsprechende Situation von Werkstück und Werkzeug alleine.

Von der Startposition S, wie sie beispielsweise in Figur 1 b am linken Werkstück dargestellt ist, wird das Werkzeug 3 entlang einer Geraden, nämlich der Verlaufsrichtung N der herzustellenden Nut, relativ zum Werkstück 1 verfahren. Die Richtung der Verlaufsrichtung N enthält dabei in aller Regel Komponenten aller drei Raumrichtungen. Im vorliegenden Fall werden die Werkzeugspindeln 101 dabei in X- und Z-Richtung verfahren, während die Schwinge 103 in Y-Richtung relativ dazu und gesteuert so verfahren wird, dass sich die gewünschte Relativbewegung von Werkstück 1 zu Werkzeug 3 in Verlaufsrichtung N der Nut ergibt.

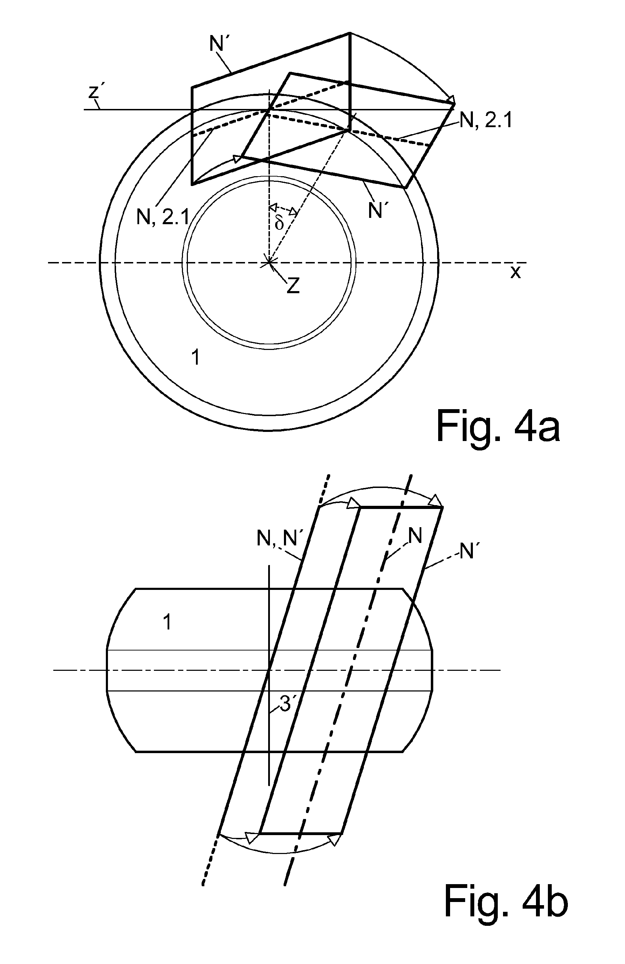

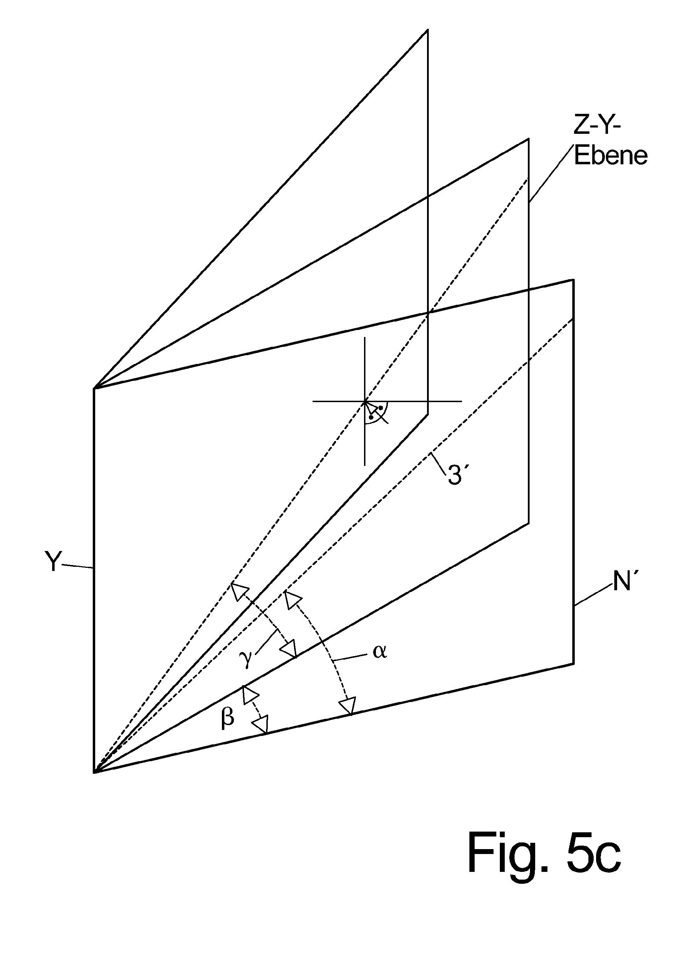

Die Figuren 4 und 5 zeigen, wie die für den Herstellvorgang benötigten Einstellwinkel γ für das Werkzeug 3 und Drehwinkel δ für das Werkstück 1 auch automatisch mittels der Steuerung ermittelt werden können.

Figur 5 zeigt die Ermittlung des Einstellwinkels γ für das Werkzeug 3:

Figur 5a zeigt die Situation betrachtet in Y-Richtung, also lotrecht auf die Tangentialebene Z', die Zeichenebene der Figur 5a, in der die Verlaufsrichtung N der herzustellenden Nut liegt, die in dieser Ebene um den Schrägstellungswinkel β zur Z-Richtung schräg gestellt ist.

Auf dieser Tangentialebene Z' steht die Längsmittelebene N' der Nut 2.1 lotrecht. In dieser Längsmittelebene N' wird - rein gedanklich - auch die Werkzeugslängsachse 3' des Werkzeuges 3 gelegt, und zwar schräg gestellt zur Z-Achse, also der Z-X-Ebene, um den vorgegebenen Anstellungswinkel α, wie in Figur 5b dargestellt.

Projiziert man nun diesen Anstellungswinkel α in X-Richtung auf die Z-Y-Ebene, wie ebenfalls in Figur 5b eingetragen, so ergibt sich dabei der Einstellungswinkel γ für das Verschwenken der Werkzeuglängsachse 3' nur um die B-Achse, der vom Anstellungswinkel α unterschiedlich ist.

Die räumliche Situation, nämlich die Relativlage der Längsmittelebene N' zur Z-Y-Ebene, die bezüglich der Y-Achse um den Winkel β zueinander verdreht liegen, zeigt Figur 5c.

Nachdem die Werkzeuglängsachse 3' um die B-Achse um diesen Einstellwinkel γ aus der Nulllage verschwenkt wurde, muss nun das Werkstück 1 um einen davon abhängigen Drehwinkel δ gedreht werden.

Die Figuren 4 zeigen die Ermittlung des Verdrehwinkels δ des Werkstückes 1:

Figur 4a zeigt die Ausgangssituation, in der die Verlaufsrichtung N der herzustellenden Nut 2.1 in der Tangentialebene Z' zur Z-Richtung liegt, die in diesem Fall die Z-X-Ebene ist.

Die Längsmittelebene N' der Nut steht in dieser Ausgangslage lotrecht auf einer Tangentialebene Z', z. B. der Z-X-Ebene.

Aus dieser Ausgangslage wird das Werkstück 1 um einen Verdrehwinkel δ verdreht, bis die mitgedrehte Längsmittelebene N' parallel zu der unter dem Einstellwinkel γ bereits eingestellten Werkzeuglängsachse 3' liegt.

Dann kann - nach Parallelverlagerung des Werkzeuges 3 in die Startposition S, falls dies noch erforderlich ist, - durch Verfahren des Werkzeuges 3 entlang der Verlaufsrichtung N die Nut 2.1 hergestellt werden.

Die Startposition wird im Allgemeinen diejenige Position sein, die in Z-Richtung unmittelbar vor Beginn der Nut liegt mit einer solchen Positionierung des Werkzeugkopfes in X- und Y-Richtung, dass - betrachtet z. B. in Verlaufsrichtung N der Nut - die Kontur des rotierenden Werkzeugkopfes 3a genau die Querschnittskontur der herzustellenden Nut ergibt.

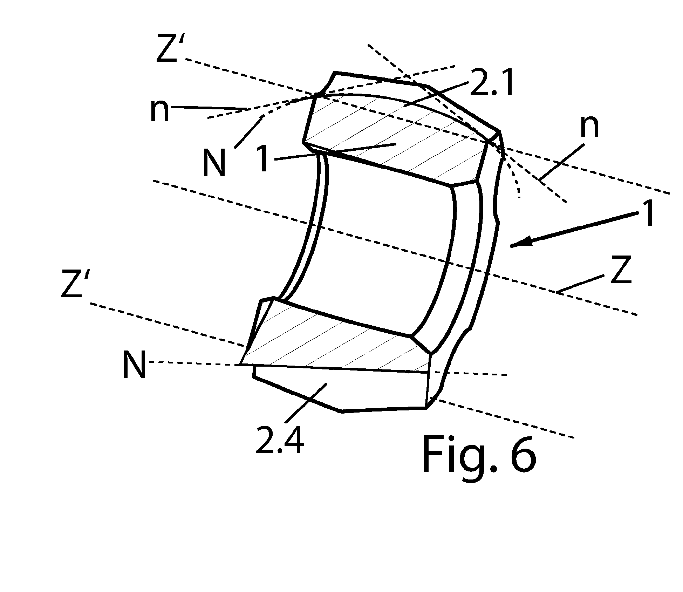

Figur 6 zeigt ferner ein Werkstück mit unterschiedlichen Nuten, wobei derart unterschiedliche Nuten an ein und demselben Werkstück in der Praxis in aller Regel nicht vorkommen:

Bei der Nut 2.4 handelt es sich um eine gerade Nut, deren Verlaufsrichtung N zur Z-Achse geneigt bzw. windschief steht und deshalb jede zur Z-Achse parallele Tangentialebene Z' an den Grundkörper des Werkstückes 1 schneidet.

Bei der Nut 2.1 handelt es sich um eine Nut mit konvex gekrümmter Verlaufsrichtung N, die in diesem Fall sphärisch gekrümmt ist, also die Verlaufsrichtung N ein Kreissegment mit gleich bleibender Krümmung ist, was jedoch nicht immer der Fall sein muss.

Eingezeichnet an dieser gekrümmten Verlaufsrichtung N sind an mehreren Stellen beispielhaft für einzelne Punkte der Verlaufsrichtung N eingezeichnete Verlaufstangenten n an die gekrümmte Verlaufsrichtung N, wie sie zur Bestimmung des Einstellwinkels γ für jeden einzelnen Punkt im Verlauf der Nut 2.1 notwendig sind.

### BEZUGSZEICHENLISTE

- S: Startposition
- X: erste Raumrichtung
- Y: zweite Raumrichtung
- Z: dritte Raumrichtung, Rotationsachse Werkstück
- Z': Tangentialebene zu Z
- N: Verlaufsrichtung der Nut
- N': Längsmittelebene der Nut
- α: Anstellwinkel des Werkzeuges
- β: Schrägungswinkel der Nut
- γ: Einstellwinkel des Werkzeuges
- α: Schwenkwinkel

- 1: Werkstück
- 2.1 - 2.6: Nut
- 3: Werkzeug
- 3a: Werkzeugkopf
- 3': Werkzeuglängsachse

- 100: Werkzeugmaschine
- 101: Werkstückspindel
- 102: Werkzeugspindel
- 103: Schwinge

## Patentansprüche

1. Verfahren zum Herstellen von Werkstücken (1) in einer Aufspannung in einer Werkzeugmaschine mit einer gesteuerten C-Achse, wobei die Werkstücke (1)
- einen um die Symmetrieachse (Z) rotationssymmetrischen Grundkörper aufweisen,
- in dessen innerer oder äußerer Umfangsfläche wenigstens eine gerade oder gekrümmt verlaufende Nut (2.1, 2.2, 2.3) vorhanden ist,
- die Längsmittelebene (N') der Nut (2.1) unter einem variablen Schrägungswinkel (β) zur Rotationsachse (Z) liegt, wobei
- jede Nut (2.1, 2.2) mittels eines stiftförmigen, um seine Werkzeuglängsachse (3') rotierenden, Material-Abnehmenden Werkzeuges (3) bei während der Bearbeitung nicht drehendem Werkstück (1) hergestellt wird,
**gekennzeichnet durch**
folgende Verfahrens-Schritte:
a) die Werkzeuglängsachse (3') des Werkzeuges (3) wird in einer zur Z-X-Ebene identischen oder parallelen Werkzeugebene unter einem Einstellwinkel (γ), der von
a1) sowohl der Form des Werkzeugkopfes (3a) und des davon abhängigen Anstellwinkels (α) der Werkzeuglängsachse (3') gegenüber
- der Verlaufsrichtung (N) einer herzustellenden geraden Nut (2.1) oder
- der Tangente an die Verlaufsrichtung (N) bei der gekrümmten Nut (2.1) in der Längsmittelebene (N')
a2) als auch dem Schrägungswinkel (β) der herzustellenden Nut (2.1)
abhängt, schräg zur Z-Achse in der Werkzeug-Ebene eingestellt,
b) das Werkstück (1) wird um die Symmetrieachse (Z) um einen Schwenkwinkel (δ) gedreht, bis die Längsmittelebene (N') der herzustellenden Nut (2.1) parallel zur Werkzeuglängsachse (3') liegt,
c) das gemäß Schritt a) eingestellte Werkzeug (3) wird **durch** Parallelverschiebung in relativ zum Werkstück (1) zugestellt, bis der Kopf (3a) des Werkzeuges (3) sich in einer Startposition (S) befindet, in der er
- in Z-Richtung vor dem Werkstück (1) liegt und
- in X-Y-Richtung das Werkzeug (3) in den Umfang des Grundkörpers des Werkstückes (1) so hineinragt, dass die Kontur des rotierenden Kopfes (3a) mit dem in der Verlaufsrichtung (N) der herzustellenden Nut (2.1) verlängerten Querschnitt der Nut (2.1) übereinstimmt und,
d) die Nut (2.1) hergestellt wird, indem von der Startposition (S) aus das rotierende Werkzeug (3) als Vorschub in Verlaufsrichtung (N) der herzustellenden Nut (2.1) im Eingriff relativ zum Werkstück (1) bewegt wird.
(gerade Nut, in Tangentialebene liegend)

2. Verfahren nach Anspruch 1,
**dadurch gekennzeichnet, dass**
bei einer geraden herzustellenden Nut (2.1), deren gerade Verlaufsrichtung (N) in einer von der Rotationsachse (Z) beabstandeten, dazu parallelen, Tangentialebene (Z') liegt,
der Einstellwinkel (γ), insbesondere rechnerisch und/oder automatisch, ermittelt wird, indem
- die Drehlage des Grundkörpers um die Symmetrieachse (Z) so gewählt wird, dass die Verlaufsrichtung (N)der herzustellenden Nut (2.1) in einer zur Z-Richtung parallelen Tangentialebene des Grundkörpers, z.B. der Z-X-Ebene liegt,
- als Einstellwinkel (γ) die Projektion des in dieser Drehlage in der Längsmittelebene (N') dieser Nut (2.1) liegenden Anstellwinkels (α) zwischen der Werkzeuglängsachse (3') und der Verlaufsrichtung (N) auf eine lotrecht auf dieser Tangentialebene stehende, zur Z-Achse parallelen Ebene, z.B. die Z-Y-Ebene, gewählt wird.
(gerade Nut, Tangentialebene schneidend)

3. Verfahren nach Anspruch 1,
**dadurch gekennzeichnet, dass**
bei einer geraden herzustellenden Nut (2.1), deren gerade Verlaufsrichtung (N) jede von der Rotationsachse (Z) beabstandete, dazu parallele, Tangentialebene (Z') schneidet,
der Einstellwinkel (γ), insbesondere rechnerisch und/oder automatisch, ermittelt wird, indem
- die Drehlage des Grundkörpers um die Symmetrieachse (Z) so gewählt wird, dass die Verlaufsrichtung (N) der herzustellenden Nut (2.1) in einer zur Z-Richtung parallelen Tangentialebene des Grundkörpers, z.B. der Z-X-Ebene liegt,
- als Einstellwinkel (γ) die Projektion des in dieser Drehlage in der Längsmittelebene (N') dieser Nut (2.1) liegenden Anstellwinkels (α) zwischen der Werkzeuglängsachse (3') und der Verlaufsrichtung (N) auf eine lotrecht auf dieser Tangentialebene stehende, zur Z-Achse parallelen Ebene, z.B. die Z-Y-Ebene, gewählt wird.
(gekrümmte Nut, Tangentialebene schneidend)

4. Verfahren nach Anspruch 1,
**dadurch gekennzeichnet, dass**
bei einer gekrümmten herzustellenden Nut (2.1), deren gekrümmte Verlaufsrichtung (N) in einer Ebene, der Längsmittelebene (N') dieser Nut (2.1), liegt und jede von der Rotationsachse (Z) beabstandete, dazu parallele, Tangentialebene (Z') schneidet,
der Einstellwinkel (γ), insbesondere rechnerisch und/oder automatisch, für jede Position in Verlaufsrichtung (N) separat ermittelt wird, indem
- die Drehlage des Grundkörpers um die Symmetrieachse (Z) so gewählt wird, dass die Verlaufstangente (n) an die Verlaufsrichtung (N) in diesem Punkt der herzustellenden Nut (2.1) in einer zur Z-Richtung parallelen Tangentialebene des Grundkörpers, z.B. der Z-X-Ebene liegt,
- als Einstellwinkel (γ) die Projektion des in dieser Drehlage und in diesem Punkt in der Längsmittelebene (N') dieser Nut (2.1) liegenden Anstellwinkels (α) zwischen der Werkzeuglängsachse (3') und der Verlaufstangente (n) an die Verlaufsrichtung (N) auf eine lotrecht auf dieser Tangentialebene stehende, zur Z-Achse parallelen Ebene, z.B. die Z-Y-Ebene, gewählt wird.

5. Verfahren nach einem der vorhergehenden Ansprüche,
**dadurch gekennzeichnet, dass**
der Einstellwinkel (γ) berechnet wird auf Grund der beschriebenen geometrischen Zusammenhänge zwischen dem Anstellwinkel (α) und dem Einstellwinkel (γ).

6. Verfahren nach einem der vorhergehenden Ansprüche,
**dadurch gekennzeichnet, dass**
für die Herstellung der nächsten Nut (2.3) mit gleichem Schrägungswinkel (β) der Vorgang nach Drehen des Werkstücks (1) um die Z-Achse um einen Teilungswinkel entsprechend des Drehabstandes der Nuten (2.1, 2.3) mit gleichem Schrägungswinkel (β) wiederholt wird.

7. Verfahren nach einem der vorhergehenden Ansprüche,
**dadurch gekennzeichnet, dass**
der Querschnitt der Nuten (2.1, 2.2) betrachtet in deren Verlaufsrichtung (N) seitensymmetrisch zu ihrer Längsmittelebene (N') ist, und insbesondere Teil einer elliptischen oder einer gotischen Kontur ist.

8. Verfahren nach einem der vorhergehenden Ansprüche,
**dadurch gekennzeichnet, dass**
bei positivem Schrägungswinkel (+β) die Parallelverschiebung des Werkzeuges (3) in die positive Y-Richtung und bei negativem Schrägungswinkel (-β) die Parallelverschiebung des Werkzeuges (3) in die negative Y-Richtung erfolgt, der Einstellwinkel (γ) jedoch der gleiche ist, sofern das Werkzeug (3) gleich gestaltet ist und ebenso die Querschnittsform der Nuten (2.1, 2.2) mit dem entgegengesetzt gleichen Schrägungswinkel (+β, -β).

9. Verfahren nach einem der vorhergehenden Ansprüche,
**dadurch gekennzeichnet, dass**
bei positivem Schrägungswinkel (+β) die Drehung des Werkstückes (1) in die positive Richtung und bei negativem Schrägungswinkel (-β) die Drehung des Werkstückes (1) in die negative Richtung erfolgt, der Einstellwinkel (γ) jedoch der gleiche ist, sofern das Werkzeug gleich gestaltet ist und ebenso die Querschnittsform der Nuten (2.1, 2.2) mit dem entgegengesetzt gleichen Schrägungswinkel (+β, -β).

10. Verfahren nach einem der vorhergehenden Ansprüche,
**dadurch gekennzeichnet, dass**
- der Anstellwinkel (α) der Werkzeuglängsachse (3') in der Längsmittelebene (N') gegenüber der Verlaufsrichtung (N) einer geraden Nut oder der Verlaufstangente eines Punktes einer gekrümmten Nut sich aus der Querschnittskontur der herzustellenden Nut (2.1, 2.2), betrachtet in deren Verlaufsrichtung (N), in Relation zur Querschnittskontur des rotierenden Werkzeugkopfes (3a), betrachtet quer der Werkzeuglängsachse (3') ergibt, und
- insbesondere die Projektion der Querschnittskontur des Werkzeugkopfes (3a) in Verlaufsrichtung (N) auf eine hierzu orthogonal stehende Nut-Querschnitts-Ebene ist, und
- insbesondere der Anstellwinkel (α) vom Werkzeughersteller vorgegeben ist.

11. Werkzeugmaschine (100) mit
- einer um die Z-Achse drehend antreibbaren Werkstückspindel (101), auf der das Werkstück (1) zentrisch mittels eines Spannmittels drehfest aufspannbar ist und die über eine gesteuerte C-Achse verfügt,
- wenigstens einer drehend antreibbaren Werkzeugspindel (102) mit drehfest darin einsetzbarem materialabnehmendem stiftförmigem einseitig auskragendem Werkzeug (3), wobei die Werkzeugspindel (102) um die B-Achse, insbesondere nur um die B-Achse, schwenkbar ist und
- wobei die Werkstückspindel (101) und die Werkzeugspindel (102) in allen drei Raumrichtungen X, Y, Z relativ zueinander verfahrbar sind,
**dadurch gekennzeichnet, dass**
die Werkzeugmaschine (100) eine Steuerung umfasst, die in der Lage ist, automatisch das Verfahren gemäß einem der vorhergehenden Ansprüche durchzuführen und hierfür den Einstellwinkel (γ), Richtung und Größe der Parallelverschiebung des eingestellten Werkzeuges (3) und den Startpunkt (S) automatisch zu bestimmen und anzufahren nach nur der Eingabe
- des Schrägungswinkels (β) der herzustellenden Nut (2.1),
- des Anstellungswinkels (α) des Werkzeuges (3),
- der Maße des Werkstückes (1) und
- der Maße des Werkzeuges (3).

12. Vorrichtung nach Anspruch 11,
**dadurch gekennzeichnet, dass**
die Werkzeugspindel (102) in einer beidseits gelagerten, U-förmigen Schwinge (103) angeordnet ist, die um die B-Achse schwenkbar ist.

13. Vorrichtung nach Anspruch 11 und 12,
**dadurch gekennzeichnet, dass**
die Werkzeugspindel (102), insbesondere die Schwinge (103), in Y-Richtung verfahrbar ist und die Werkstückspindel (101) in X- und Z-Richtung verfahrbar ist.
